# EUROPÄISCHE PATENTANMELDUNG

(11) **EP 2 161 795 A2**
(43) Veröffentlichungstag der Anmeldung: **10.03.2010**
(21) Anmeldenummer: 09169236.8
(22) Anmeldetag: 02.09.2009
(51) Int. Cl.: H01R 24/08

(54) **Miniaturisierter Hochstromstecker**

(30) Priorität: 08.09.2008 DE 102008046235
(71) Anmelder: FCT electronic GmbH, 81829 München (DE)
(72) Erfinder: Floßmann, Friedrich Georg, 83646, Bad Tölz (DE); Schmid, Andreas Joseph, 82031, Grünwald (DE); Rappenglitz, Erich, 86920, Denklingen (DE); Fuhrmann, Frank, 80799, München (DE)
(74) Vertreter: Ganahl, Bernhard

(57) **Zusammenfassung**

Die Erfindung betrifft einen miniaturisierten Hochstromstecker zum elektrischen Verbinden eines Kabels mit einem Elektrofahrzeug oder einer entsprechenden Ladestation. Nach einem ersten Aspekt zur vorliegenden Erfindung ist der Hochstromstecker aus einem langgestreckten, rohrförmigen Gehäuse mit im wesentlichen dreieckförmigen Querschnitt ausgebildet und weist Steckkontaktelemente auf, die in einem Dreieck-Raster angedeutet sind. Nach einem weiteren Aspekt der vorliegenden Erfindung umfasst der Hochstromstecker ein rohrförmiges Gehäuse und ein darin angeordnetes Vergussteil, in dem sich ein in seine einzelnen Adern aufgespleißtes Kabel befindet, wobei die Adern innerhalb des Vergussteils mit den Steckkontaktelementen verbunden sind.

## Beschreibung

Die Erfindung betrifft einen miniaturisierten Hochstromstecker zum elektrischen Verbinden eines Kabels mit einem Elektrofahrzeug bzw. mit einer korrespondierender Ladestation.

Es wurden bereits unterschiedliche Ladestationen zum Aufladen von Elektrofahrzeugen entwickelt. Der Ladevorgang soll möglichst schnell erfolgen, damit das Elektrofahrzeug nicht unnötig lange still steht. Hierzu muss ein Strom mit hoher Leistung von der Ladestation an das Elektrofahrzeug übertragen werden. Dies bedeutet, dass sowohl die Stromstärke als auch die Spannung hoch sein müssen. Typische Werte für den Strom und die Spannung betragen zum Beispiel 16-40 A und 220-230 V. Bei derartigen elektrischen Leistungen ist eine schnelle Ladung der Akkumulatoren eines Elektrofahrzeuges möglich.

Es gibt bereits Hochstromstecker, die zum Verbinden von Kabeln mit derartigen Verbrauchern oder Ladestationen geeignet sind. Diese Hochstromstecker sind jedoch sehr groß, benötigen hohe Steckkräfte und werden vor allem in industriellen Umfeld eingesetzt. Für die Verwendung an einem Kabel für ein Elektrofahrzeug bzw. unmittelbar an einem Elektrofahrzeug oder einer entsprechenden Ladestation sind diese Hochstromstecker nicht geeignet. Denn ein solches Elektrofahrzeug wird von unterschiedlichsten Personen benutzt, die einen wenig kraftaufwendigen Steckvorgang wünschen. Weiterhin sollte der Hochstromstecker möglichst klein und handlich ausgebildet sein. Diese Anforderungen an einen Hochstromstecker sind jedoch nicht einfach zu erfüllen, zumal ein Hochstromstecker umfangreiche Sicherheitsanforderungen erfüllen muss.

Diese Sicherheitsanforderungen sind in Deutschland in den Normen DIN EN 62196-1 (Stecker, Steckdosen, Fahrzeug, Steckvorrichtung und Fahrzeugstecker - Ladung von Elektrofahrzeugen -) und in der Norm DIN EN 60309-1 (Stecker, Steckdosen und Kupplungen für industrielle Anwendungen) festgelegt. Hierin sind sowohl mechanische als auch elektrische Aspekte definiert. So muss ein solcher Stecker eine gewisse Festigkeit aufweisen, so dass er von einem Kraftfahrzeug überfahren werden kann. Weiterhin müssen die Stecker so angeordnet sein, dass Kriech- und Leckströme zuverlässig vermieden werden können.

Es gibt bereits eine Vielzahl von Entwicklungen für Stecker, die zum Herstellen einer elektrischen Verbindung zwischen einem Elektrofahrzeug und einer Ladestation geeignet sein sollen (z.B. DE 19605206 C2, DE 19649707 A1, EP 0616735 B1, DE 4446853 A1).

Diese bekannten Stecker, sofern sie zum Verbinden von mehreren Polen ausgebildet sind, weisen ein etwa zylinderförmiges Gehäuse mit kreisförmigen Querschnitt auf, da ein solches Gehäuse bei minimalen Umfang ein maximales Volumen zur Anordnung der einzelnen Pole und der notwendigen Isolierung erlaubt.

Diese bekannten Stecker erfüllen nicht die oben erläuterten Anforderungen. Entweder sind sie zu groß oder schwer, oder nur mit hoher Kraft zu stecken oder sie erfüllen nicht die geforderten Sicherheitsvorschriften.

Aus der US 4,911,652 geht ein Stecker mit einem dreieckförmigen Gehäuse hervor.

In der DE 1 056 221 C1 ist ein Steckverbinder mit einem Steckergehäuse, einem Kabel, das in seine Adern aufgespleißt ist, beschrieben, wobei die Adern jeweils mit einem Steckerstift verbunden sind. Das Ende des Kabels, die aufgespleißten Adern und Endbereiche der Steckerstifte sind in ein Gießharz eingegossen.

Aus der DE 87 18 055 U1 und der DE 20 2005 004231 U1 gehen weitere Steckverbinder hervor.

Der Erfindung liegt die Aufgabe zugrunde, einen miniaturisierten Hochstromstecker zum elektrischen Verbinden eines Kabels mit einem Elektrofahrzeug bzw. mit einer entsprechenden Ladestation zu schaffen, wobei der Hochstromstecker klein und handlich ausgebildet ist, mit geringer Kraft steckbar ist und die geforderten Sicherheitsanforderungen erfüllt.

Die Erfindung wird mit einem miniaturisierten Hochstromstecker mit den Merkmalen des Anspruchs 1 oder des Anspruchs 5 gelöst. Vorteilhafte Ausgestaltungen der Erfindung sind in den jeweiligen Unteransprüchen angegeben.

Gemäß einem ersten Aspekt zur vorliegender Erfindung umfasst ein miniaturisierter Hochstromstecker zum elektrischen Verbinden eines Kabels mit einem Elektrofahrzeug oder einer entsprechenden Ladestation
- ein langgestrecktes, rohrförmiges Gehäuse mit einem im wesentlichen dreieckförmigen Querschnitt, in dem an einem Ende ein Isolierkörper angeordnet ist, und
- zumindest vier Steckkontaktelemente, die in Durchgangsöffnungen des Isolierkörpers lagern und die in einem Dreieck-Raster angeordnet sind.

Das Vorsehen eines Gehäuses mit im wesentlichen dreieckförmigen Querschnitt ermöglicht zum Einem eine hohe Festigkeit und zum Anderen erlaubt es eine effiziente Anordnung der im Dreieck-Raster angeordneten Steckkontaktelemente.

Durch die dreieckförmige Ausbildung des Gehäuses kommt ein solcher miniaturisierter Hochstromstecker auf einer im wesentlich ebenen Unterlage auf einer Seitenfläche zum Liegen. Bei einer mechanischen Belastung des Hochstromsteckers, z. B. beim Überfahren des Steckers mit einem Kraftfahrzeug, wird die Last an einer Dreieckspitze des Hochstromsteckers eingebracht und verteilt sich über die angrenzende Seitenwandungen etwa gleichmäßig nach unten. Die angelegte Kraft wird hierdurch aufgeteilt und sicher nach unten abgeleitet, ohne dass der Hochstromstecker beschädigt wird. Untersuchungen haben gezeigt, dass durch die im wesentlichen dreieckförmige Ausgestaltung die Festigkeit gegenüber herkömmlichen rohrförmigen Hochstromsteckern mit kreisförmigen Querschnitt erheblich gesteigert wird.

Die Steckkontaktelemente sind in einem Dreieck-Raster angeordnet. Ein Dreieck-Raster ist ein regelmäßiges Raster, bei welchem benachbarte Gitterpunkte jeweils eine dreieckförmige Zelle bilden. Vorzugsweise sind die dreieckförmigen Gitterzellen gleichseitige Dreiecke. Die Steckkontaktelemente sind jeweils mit ihrem Mittelpunkt an einem Knoten des Dreieck-Rasters angeordnet. Die Verwendung eines Dreieck-Rasters erlaubt einen maximalen Abstand der Steckkontaktelemente bei minimaler Fläche. Hierdurch kann die Gefahr von Kriech- und Leckströmen minimiert werden.

Ein solches Dreieck-Raster lässt sich einfach und mit wenig Überstand in das Gehäuse mit im wesentlichen dreieckförmigen Querschnitt einpassen. Hierdurch kann der gesamte Hochstromstecker sehr kompakt ausgebildet sein. Die Anmelderin hat einen solchen Hochstromstecker für Ströme von 16 A bis 50 A und Gleich- und Wechselspannungen von 220-440 V mit einer Höhe von 28,4 mm und einer Breite von 35,55 mm realisiert. Im Vergleich zur herkömmlichen Hochstromsteckern sind dies äußerst kleine Abmessungen. Dieser Hochstromstecker erfüllt die DIN EM 62196-1 und DIN EN 60 309-1 Normen.

Nach einem weiteren Aspekt der vorliegenden Erfindung wird ein miniaturisierter Hochstromstecker zum elektrischen Verbinden eines Kabels mit einem Elektrofahrzeug oder mit einer entsprechenden Ladestation vorgesehen, der ein rohrförmiges Gehäuse aufweist, in dem ein Vergussteil lagert. Das Vergussteil besteht aus einer ausgehärteten Vergussmasse, in die ein Endabschnitt des mehrere Adern umfassenden Kabels eingegossen ist. Innerhalb des Vergussteils ist das Kabel in seine einzelnen Adern aufgespleißt. Die Adern sind jeweils mit einem Steckkontaktelement verbunden. Die Steckkontaktelemente lagern in einem endseitig an das Vergussteil angeformten Isolierkörper.

Die Verwendung eines Vergussteils in einem Gehäuse erlaubt selbst bei einer miniaturisierten Ausführung des Hochstromsteckers auf Dauer eine sichere Isolierung und Abschirmung der Adern, insbesondere an den Anbindungsstellen zu den Steckkontaktelementen, von Feuchtigkeit und Schmutz. Hierdurch wird somit einerseits die hohe Festigkeit des Gehäuses mit der hermetischen Abschirmung durch die Vergussmasse kombiniert, wodurch einfach eine kompakte Ausgestaltung des Hochstromsteckers erzielt wird, wobei dessen elektrische Eigenschaften dauerhaft beibehalten werden. Der Aufbau des Hochstromsteckers ist hierdurch auch sehr einfach und er kann in hohen Stückzahlen mit exakt reproduzierbaren elektrischen und mechanischen Eigenschaften hergestellt werden.

In einer bevorzugten Ausführungsform weist der Vergusskörper ein Spiel bezüglich des Gehäuses auf und zwischen dem Vergusskörper und dem Gehäuse ist eine Dämpfungsschicht, die z. B. aus Silikon ausgebildet ist, vorgesehen. Hierdurch wird der Hochstromstecker gegen Vibrationen geschützt, da von außen an das Gehäuse angelegte Vibrationen nicht unmittelbar auf das Vergussteil übertragen werden. Weiterhin wird die Fertigung des Hochstromsteckers erheblich vereinfacht, da bei der Herstellung des Vergussteils dieses erheblich schrumpft und durch das Untermaß zum Gehäuse das Vergussteil mit wesentlich größerer Toleranz als das Gehäuse gefertigt werden kann. Die Dämpfungsschicht dient hier auch als Toleranzausgleich. Vorzugsweise ist die Dämpfungsschicht aus Silikon ausgebildet. Sie kann jedoch auch aus anderen Materialien, wie z. B. einer dünnen Schaumstoffschicht, ausgebildet sein.

Die Erfindung wird nachfolgend näher an Hand von in den Zeichnungen dargestellten Ausführungsbeispielen erläutert. Die Zeichnungen zeigen:
- Figur 1:: einen erfindungsgemäßen Hochstromstecker in perspektivischer An- sicht mit Blickrichtung auf das Steckgesicht,
- Figur 2:: ein Unterteil des Gehäuses des Hochstromsteckers nach Figur 1 mit Blickrichtung auf die Innenseite,
- Figur 3a, 3b:: ein Oberteil des Gehäuses des Hochstromsteckers nach Figur 1 in perspektivischer Ansicht mit Blickrichtung auf die Innenseite, und auf die Außenseite,
- Figur 4:: einen Rasthebel des Gehäuses des Steckverbinders nach Figur 1 in perspektivischer Ansicht,
- Figur 5:: ein Vergussteil des Hochstromsteckers nach Figur 1 in perspektivi- scher Ansicht,
- Figur 6:: das Vergussteil nach Figur 5 im Längsschnitt,
- Figur 7:: den Hochstromstecker nach Figur 1 im Längsschnitt mit Staubkappe
- Figur 8a-8j:: ein aus zwei Isolierteilkörpern ausgebildeter Isolierkörper des Hoch- stromsteckers nach Figur 1 in perspektivischer Ansicht, einer Seiten- ansicht, Frontansicht, Draufsicht und Rückansicht,
- Figur 9a, 9b:: ein Kontaktsteckelement in Form einer Buchse in perspektivischer An- sicht und im Teilschnitt,

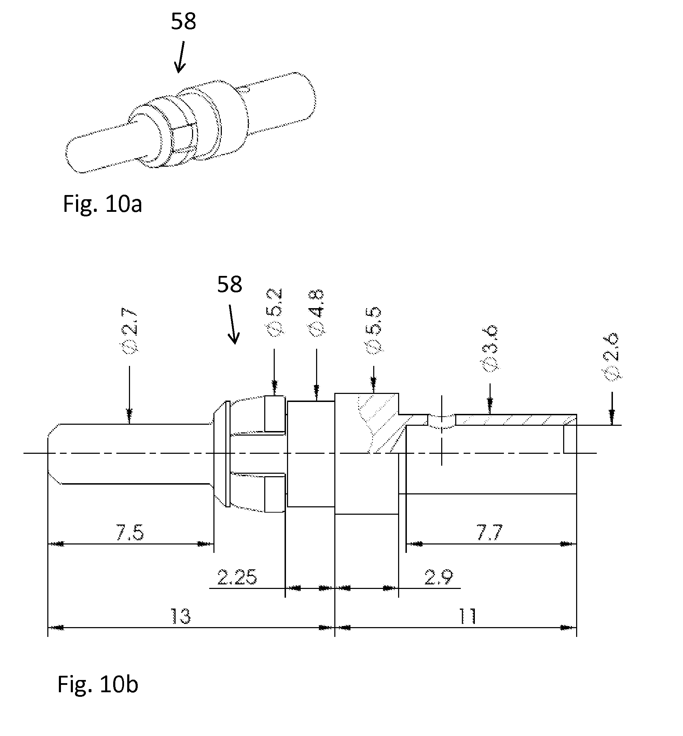

- Figur 10a, 10b:: ein Kontaktsteckelement in Form eines Stiftes in perspektivischer An- sicht und im Teilschnitt,

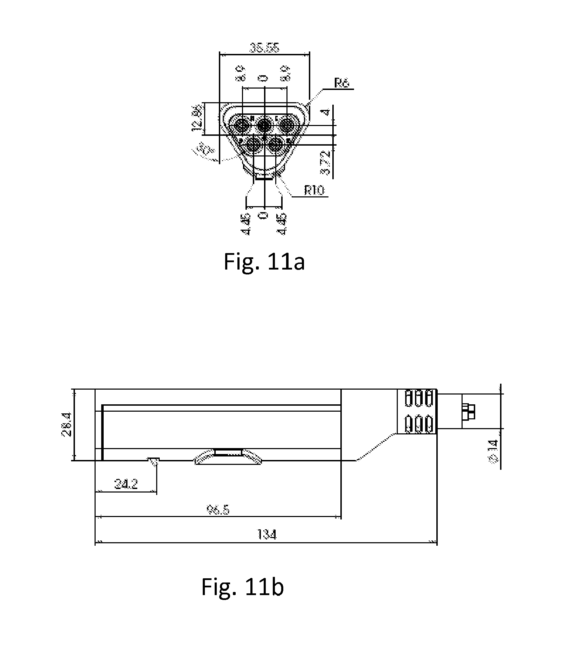

- Figur 11a, 11b:: schematische Frontansicht und Seitenansicht des Hochstromsteckers nach Figur 1 mit Bemassung,
- Figur 12a-12c:: eine Gegensteckerbuchse für den Hochstromstecker nach Figur 1 in perspektivischer Ansicht von vorne, perspektivischer Ansicht von hinten und in einer Frontansicht,
- Figur 13:: einen Schnitt durch einen in die Gegensteckerbuchse nach Figur 12a- 12c eingesteckten Hochstromsteckers nach Figur 1
- Figur 14:: einen Hochstromstecker mit stiftartigen Steckkontaktelemente in per- spektivischer Ansicht,
- Figur 15:: eine Gegensteckerbuchse für den Hochstromstecker nach Figur 14 in perspektivischer Ansicht,
- Figur 16a-16c:: eine Hülse zum Abdecken des Verbindungsbereichs der Steckkontakt- elemente und der Adern beim Vergießen eines Vergussteils eines wei- teren Ausführungsbeispiels des erfindungsgemäßen Hochstromste- ckers in perspektivischer Ansicht, in einer perspektivischen Schnittan- sicht und einer weiteren Schnittansicht, und
- Figur 17:: ein weiteres Ausführungsbeispiel eines erfindungsgemäßen Hoch- stromsteckers mit den in Fig. 16a-16c gezeigten Hülsen in einem Schnitt entlang einer horizontalen Ebene.

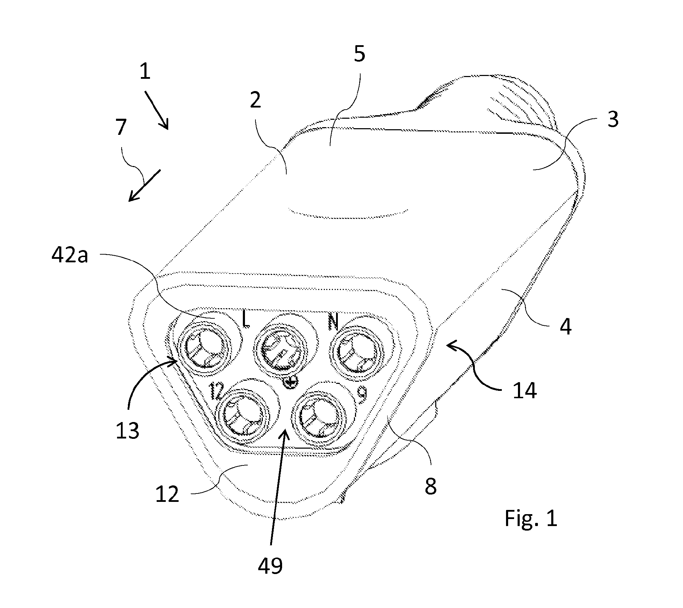

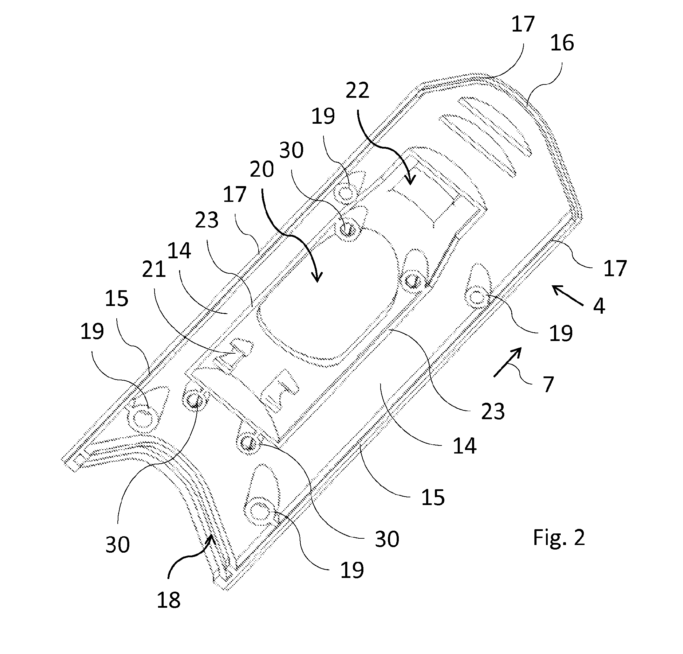

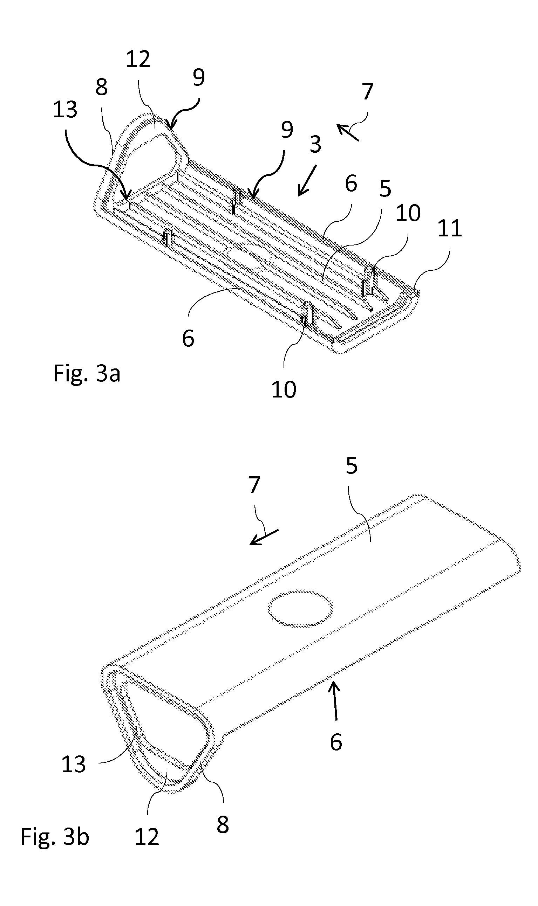

Ein erstes Ausführungsbeispiel des erfindungsgemäßen Hochstromsteckers 1 ist in den Figuren 1 bis 7 dargestellt. Dieser Hochstromstecker 1 weist ein langgestrecktes, rohrförmiges Gehäuse 2 auf. Das Gehäuse ist aus einem Oberteil 3 (Figur 3) und einem Unterteil 4 (Figur 2) ausgebildet.

Das Oberteil 3 weist eine langgestreckte Deckenwandung 5 auf, die an ihren längsseitigen Randbereich ein Stück nach unten abgebogen ist und in Längskanten 6 endet. An den in Steckrichtung 7 vorderen Ende des Oberteils ist ein Gehäusering 8 einstückig am Oberteil 3 ausgebildet. Die Längskanten 6 und die rückwärtige freiliegende Kante des Gehäuserings 8 weisen innenseitig eine Abstufung 9 auf. Weiterhin sind innenseitig am Oberteil 3 nach unten weisende Steckstifte 10 und Längsrippen ausgebildet. Am rückseitigen Randbereich des Oberteils 3 ist innenseitig eine Dichtnut 11 ausgebildet. Am Gehäusering 8 ist eine Blende 12 angeformt, die eine Öffnung 13 für das Steckgesicht aufweist. Der Gehäusering 8 steht ein Stück in Steckrichtung 7 an der Blende 12 vor.

Das Unterteil 4 besitzt die Form einer etwa V-förmigen Schale mit zwei Seitenwandungen 14, wobei der Übergangsbereich zwischen den beiden Seitenwandungen 14 abgerundet ist. Diese Seitenwandungen 14 sind oben jeweils durch eine frei liegende Längskante 15 und in Steckrichtung 7 vorne durch eine vordere Kante 16 begrenzt. Die Längskanten 15 und die vordere Kante 16 sind jeweils mit einer Stecklippe 17 versehen, die gegenüber der Innenfläche des Unterteils 4 etwas zurückversetzt ist. An dem in Steckrichtung hinteren Rand ist im Unterteil 4 eine Dichtnut 18 ausgebildet. Weiterhin sind angrenzend zu den Längskanten 15 vier Buchsen 19 zur Aufnahme der Steckstifte 10 des Oberteils 3 vorgesehen.

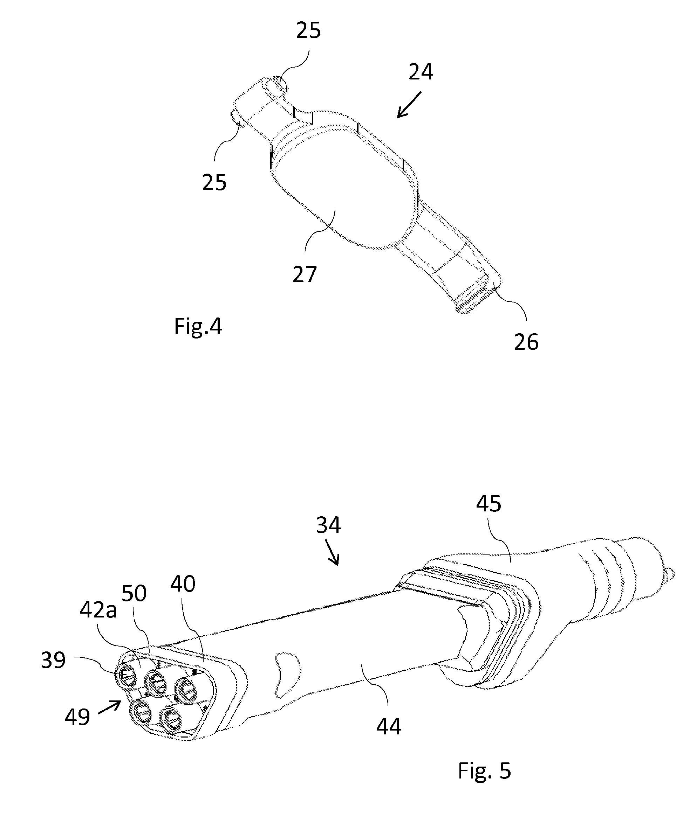

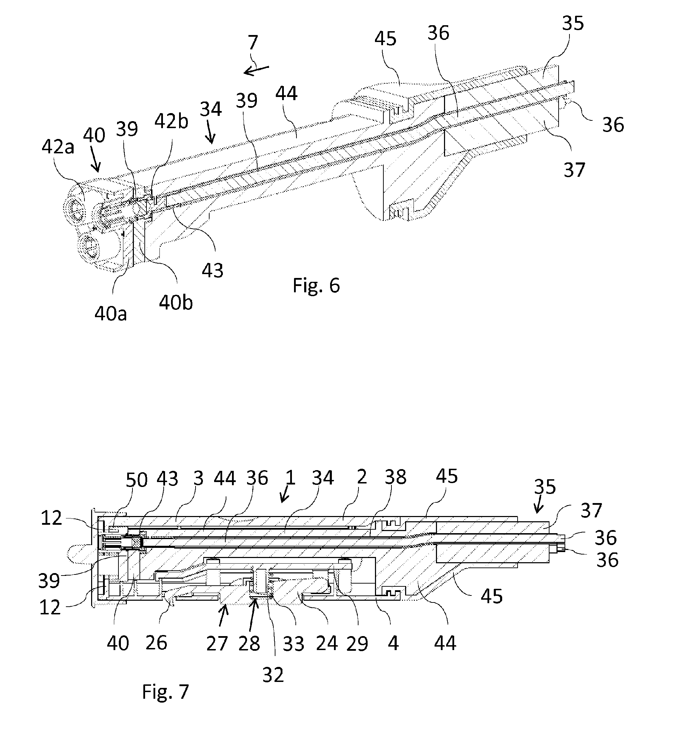

Im Bodenbereich des Unterteils 2 ist eine langgestreckte Öffnung 20 etwa in der Längsmitte des Unterteils 4 eingebracht. In Steckrichtung 7 rückseitig von der Öffnung 20 sind zwei Lagerschalen 21 zur drehbaren Lagerung eines quer zur Steckrichtung angeordneten Stiftes am Unterteil 4 angeformt. In Steckrichtung vor der Öffnung 20 ist eine Rastnasenöffnung 22 eingebracht. Der Bereich der Lagerschalen 21, Öffnung 20 und Rastnasenöffnung 22 ist von einem Innenwandungsabschnitt 23 umgeben. In den Lagerschalen 21 lagert ein Rasthebel 24 (Fig. 4, 7) mit zwei fluchtenden Lagerstiften 25. Der Rasthebel 24 erstreckt sich von den Lagerschalen 21 bis zur Rastöffnung 22, an der er eine nach unten vorstehende Rastnase 26 aufweist. Im Bereich der Öffnung 20 besitzt der Rasthebel 24 eine nach unten durch die Öffnung 20 vorstehende Betätigungstaste 27. An der nach innen weisenden Seite des Rasthebels 24 ist im Bereich der Betätigungstaste 27 ein vertikales Sackloch 28 ausgebildet.

Der Innengehäuseabschnitt 23 ist mit einem Innendeckel 29 abgedeckt. Der Innendeckel 29 weist vier nach unten vorstehende Steckstifte auf, die in angrenzend zum Innengehäuseabschnitt 23 angeordnete Buchsen 30 eingreifen. Weiterhin weist der Innendeckel 29 gegenüberliegend zu den Lagerschalen 21 zwei nach unten weisende Stege 31 auf, an denen korrespondierende Lagerschalenhälften ausgebildet sind, so dass die Lagerstifte 25 vollständig umschlossen sind. Der Innendeckel 29 weist im Bereich gegenüberliegend zum Sackloch 28 des Rasthebels 24 eine nach unten weisenden sich bis in den Bereich des Sacklochs 28 erstreckenden Hohlstift 32 auf, der von einer Schraubenfeder 33 umgeben ist. Die Schraubenfeder 33 drückt den, an den Lagerstiften 25 schwenkbar gelagerten Rasthebel 24 nach unten.

Im zusammengebauten Zustand ist der Innendeckel 29 mit dem Innengehäuseabschnitt 23 verklebt. Hierdurch wird eine Hohlkammer für den Rasthebel 24 begrenzt. Das Unterteil 4 ist mit dem Oberteil 3 im Bereich der Längskanten 6, 15 und im Bereich der vorderen Kante 16 des Unterteils 4 bzw. der rückseitigen Kante des Gehäuserings 8 verklebt.

Das Unterteil 4 und das Oberteil 8 sind Spritzgussteile, die vorzugsweise aus ABS oder einem Kunststoffgemisch aus ABS und Polycarbonat (PC) ausgebildet sind. Ein derartiges Kunststoffgemisch wird beispielsweise von der Firma General Electric unter der Handelsbezeichnung CYCOLOY^{®} vertrieben. Dieses langgestreckte Gehäuse 2 weist im wesentlichen einen dreieckförmigen Querschnitt auf, dessen Ecken abgerundet sind. Diese Querschnittsform ist vorteilhaft bezüglich der Festigkeit als auch bezüglich Raumausnützung zum Anordnen des Steckgesichtes, das unten näher erläutert wird.

Die Ausbildung des Oberteils 3 mit einer Deckenwandung 5 und dem Gehäusering 8 bewirkt mehrere Vorteile:
1. Durch die dreidimensionale Ausgestaltung des Oberteils 3 besitzt es eine wesentlich höhere Festigkeit als ein im wesentlichen ebenflächiges Element.
2. Durch das Vorsehen des Gehäuserings 8 wird der Kantenbereich, an den das Oberteil 3 mit dem Unterteil 4 in Kontakt steht und mit diesem verklebt ist, wesentlich verlängert, wodurch die Festigkeit der Verbindung zwischen dem Oberteil 3 und dem Unterteil 4 erheblich gesteigert wird.
3. Das Oberteil 3 ist einfach als Spritzgussteil fertigbar und ist insbesondere, obwohl es ein dreidimensionales Gebilde mit einer Ringtopologie aufweist, mittels eines einfachen Werkzeuges herstellbar und entformbar.
4. Da der Gehäusering 8 das Steckgesicht umfasst, was den empfindlichsten Teil des Hochstromsteckers 1 darstellt, wird hier ein maximaler mechanischer Schutz sichergestellt.

Da die Abstufung 9 des Oberteils 3 innerhalb der Stecklippe 17 des Unterteils 4 angeordnet ist, werden bei einer Belastung von oben Kraftmomente nach außen erzeugt, die die Abstufung gegen die Stecklippe 17 drücken.

Im rohrförmigen Gehäuse 2 lagert ein Vergussteil 34 (Figur 5, 6, 7) das Vergussteil 34 ist aus einer ausgehärteten Vergussmasse ausgebildet, in die ein Endabschnitt eines Kabels 35 eingegossen ist. Das Kabel 35 weist mehrere Adern 36 auf. Das Kabel ist innerhalb des Vergussteils in die einzelnen Adern aufgespleißt, d. h., dass ein Kabelisolationsmantel 37 von den einzelnen Adern 36 entfernt ist und diese lediglich durch einen dünnen Aderisolationsschutz 38 geschützt sind. Die Adern 36 sind jeweils mit einem Steckkontaktelement 39 verbunden. Im Verbindungsbereich zwischen dem Steckkontaktelement 39 und der jeweiligen Ader 36 ist der Aderisolationsschutz entfernt. Im vorliegenden Ausführungsbeispiel sind die Steckkontaktelemente 39 jeweils an eine Ader 36 gecrimpt. Die Steckkontaktelemente 39 lagern in einem Isolierkörper 40.

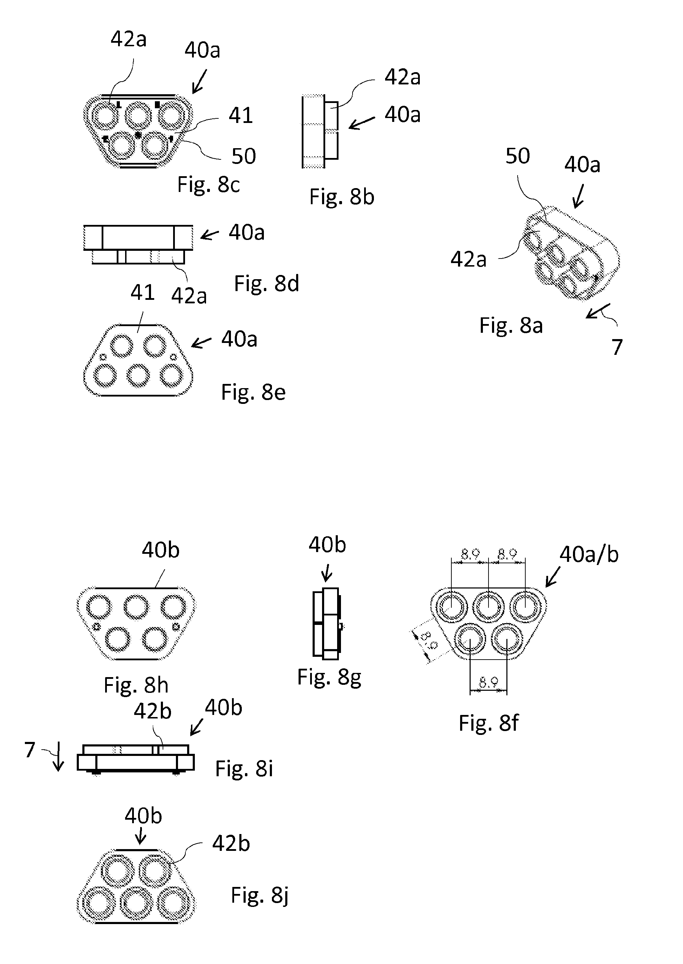

Der Isolierkörper 40 (Fig. 8a-8j) ist aus zwei Teilkörpern 40a, 40b ausgebildet, die jeweils einen im wesentlichen scheibenförmigen Grundkörper 41 aufweisen, in dem in einem regelmäßigen Dreieck-Raster Durchgangsbohrungen ausgebildet sind, die jeweils eine Kontaktkammer bilden. In diesen Kontaktkammern lagern die Steckkontaktelemente 39. Auf der in Steckrichtung 7 vorne liegenden Seite des Isolierkörpers 40 sind die Durchgangsbohrungen jeweils durch korrespondierende Buchsen 42a nach vorne verlängert, die sich über das vordere Ende der Steckkontaktelemente 39 hinaus erstrecken. Die Buchsen bilden Abschirmbuchsen, um benachbarte Steckkontaktelemente von Leck- und Kriechströmen abzuschirmen. Auf der Rückseite des Isolierkörpers 40 sind die Durchgangsbohrungen mit nach hinten vorstehende Buchsen 42b verlängert. Der Durchmesser dieser Buchsen ist etwas größer als der Durchmesser der Durchgangsbohrung im Grundkörper 41 des Isolierkörpers 40. Hierdurch ist eine Stufe 43 ausgebildet, an der die Steckkontaktelemente 39 an einer entsprechend nach außen abgesetzten Stufe anliegen (Fig. 7). Diese aufeinander abgestimmten Stufen 43 dienen einerseits zur exakten Längspositionierung der Steckkontaktelemente 39 im Isolierkörper 40 und andererseits als Abdichtung beim Vergießen des Vergussteils 34.

Bedingt durch das Herstellungsverfahren wird der Isolierkörper 40 aus zwei Teilen 40a, 40b hergestellt, die an ihren im wesentlichen ebenflächigen Berührungsflächen miteinander verklebt sind. Durch die Herstellung des Isolierkörpers aus zwei Teilen kann eine hohe Präzision der daran angeformten Buchsen 42a, 42b gewährleistet werden. Im Rahmen der Erfindung ist selbstverständlich auch eine einteilige Ausbildung des Isolierkörpers möglich.

Das Vergussteil 34 wird mit einem Vergussmaterial in einer Form vergossen. Vorzugsweise werden zwei unterschiedliche Vergussmaterialien verwendet. Ein erstes, hartes Vergussmaterial wird zum Ausgießen des Kerns 44 des Vergussteils 34 zwischen dem Isolierkörper 40 und dem Kabelisolationsmantel 37. Dieser Kern wird aus einem harten und steifen Vergussmaterial gegossen. Ein solches Vergussmaterial ist z.B. ein thermoplastischer Schmelzklebstoff auf Polyamidbasis, wie er z.B. unter dem Handelsnamen MACROMELT von der Firma Henkel vertrieben wird.

Dieser Kern 44 ist im rückwärtigen Bereich von einer Tülle 45 umschlossen. Die Tülle erstreckt sich von einem Abschnitt des Vergussteils 34, der komplementär zu den Dichtnuten 11, 18 des Gehäuses 2 ist bis nach hinten über den Kabelisolationsmantel 37 des Kabels 35. Diese Tülle 45 wird einstückig an den Kern 44 durch Gießen ausgeformt. Sie ist somit Bestandteil des Vergussteils 34 und aus einem im Vergleich zum Kern 44 wesentlich elastischeren Material wie z.B. Badaflex ^{®} ausgebildet, das ein thermoplastisches Elastomer ist, das von der Firma Bada vertrieben wird. Diese elastische Tülle 45 liegt überwiegend außerhalb des Gehäuses 2 und erlaubt ein gewisses Abbiegen des rückwärtigen Endabschnittes des erfindungsgemäßen Hochstromsteckers 1.

Der Endbereich des Kabels 35 ist somit vom Endabschnitt des Kabelisolationsmantels 37 bis zum Verbindungsbereich der Adern mit den Steckkontaktelementen 39 durchgehend vergossen. Er ist somit gegenüber Feuchtigkeit und Verschmutzungen hermetisch abgeschlossen. Zudem sind die Adern im Vergussmaterial fest positioniert, so dass keine Relativbewegung zwischen den Adern, den Steckkontaktelementen bzw. dem Isolierkörper auftreten, wodurch die Gefahr einer mechanischen Beschädigung der Adern und deren Verbindung zu den Steckkontaktelementen gering gehalten wird.

Das Vergussteil 34 ist mit einer Dämpfungsschicht (nicht in Fig. 7 gezeigt) aus Silikon umgeben, die auf das Gehäuse ausgeübte Vibrationen von dem Vergussteil fernhält. Beim vorliegenden Ausführungsbeispiel ist die Dämpfungsschicht an der gesamten Kontaktfläche zwischen dem Vergussteil 34 und dem Gehäuse 2 angeordnet. Die Dämpfungsschicht kann im Rahmen der Erfindung auch auf einige wenige Bereiche lokal begrenzt ausgebildet sein.

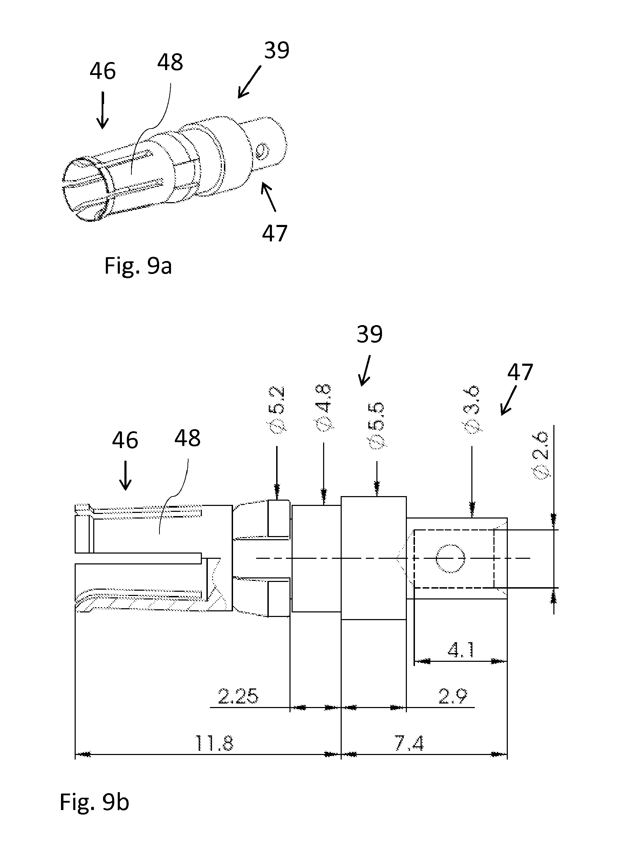

Im vorliegenden Ausführungsbeispiel sind die Steckkontaktelemente 39 Buchsen (Figur 9a, 9b) mit einem Steckabschnitt 46 und einem Crimpabschnitt 47. Diese Buchsen sind für Steckkontaktstifte mit einem Durchmesser von 2,7 mm ausgebildet. Im Bereich des Steckabschnittes 46 weisen die Steckkontaktelemente nach vorne vorstehende, federnde Laschen 48 auf, die einen zylinderförmigen Steckbereich elastisch federnd begrenzen. Die Laschen 48 sind mit einer Schicht aus Gold, Hartsilber oder Nickel-Phosphor mit einer Stärke von vorzugsweise 5 µm beschichtet. Hierdurch wird auch nach einer Vielzahl von Steckvorgängen eine sichere Steckverbindung gewährleistet. Der erfindungsgemäße Hochstromstecker ist für zumindest 5000 Steckvorgänge ausgebildet.

Der Isolierkörper 40 bildet mit dem Steckkontaktelementen 39 ein Steckgesicht 49 (Fig. 5). Die Steckkontaktelemente sind in einem Dreieck-Raster angeordnet, das in vorliegenden Ausführungsbeispiel ein gleichseitiges Dreieck-Raster ist, d.h., dass zwei beliebige benachbarte Steckkontaktelemente 39 den gleichen Abstand aufweisen. Im vorliegenden Ausführungsbeispiel beträgt der Mittenabstand 8,9 mm (Fig. 8f). Das vorliegende Ausführungsbeispiel weist fünf Steckkontaktelemente 39 auf, wovon zwei Steckkontaktelemente 39 Pole L, N zum Leiten von Hochstrom, eines zum Leiten von Masse und zwei "9" und "12" zum Leiten eines Pilotsignals vorgesehen sind. Die beiden hochstromleitenden Steckkontaktelemente sind maximal voneinander beabstandet, wobei das masseführende Steckkontaktelement in einer Reihe zwischen diesen beiden hochstromführenden Steckkontaktelementen angeordnet ist. Die beiden Steckkontaktelemente für das Pilotsignal sind in einer zweiten Reihe unterhalb der ersten Reihe angeordnet.

Dieses Steckgesicht 49 mit einer oberen Reihe mit drei Steckkontaktelementen und einer unteren Reihe mit zwei Steckkontaktelementen, wobei alle Steckkontaktelemente im Dreieck-Raster angeordnet sind, ist in Kombination mit dem im wesentlichen dreieckförmigen Gehäuse sehr vorteilhaft, da im Gehäuse 2 unterhalb des Steckgesichts 49 noch Platz für weitere Funktionselemente (hier: Rasteinrichtung) ist und trotzdem ein sehr kompaktes und solides Gehäuse erhalten wird.

Als Material für den Isolierkörper wird vorzugsweise ein Material der Isolierstoffgruppe I oder I gemäß der Norm EN 50124 und vorzugsweise ein Material mit einer Kriechstromfestigkeit (CTI, Comparative Tracking Index) von zumindest 500 und insbesondere von zumindest 600 verwendet. Solche Materialien sind z.B. Polyethylen (PE-LD, PE-HD), Polyesterharz, Polytetrafluorethylen (PTFE), Ethylen Vinylacetat (E/VA), Polyphthalamid mit 33% Glasfaseranteil (PPA GF33), Polypropylen (PP) oder Polyamid (PA 6, PA66, PA6 VO - brandgeschützt, PA6 E - extrudiert), insbesondere das unter der Handelsbezeichnung Wellamid vertriebene Polyamid der CP-Polymere-Technik GmbH & Co. KG. Die Kombination des derart ausgebildeten Isolierkörpers in Verbindung mit dem Dreieck-Raster ist besonders vorteilhaft, da hierdurch Kriech- und Leckströme auch bei hohen Stromstärken sicher vermieden werden können, obwohl der Hochstromstecker 1 sehr kompakt ausgebildet ist. Das Dreieck-Raster erlaubt einen maximalen Abstand zwischen den benachbarten Steckkontaktelementen bei minimaler Fläche des Steckgesichts. Der Isolierkörper mit einem Material mit einem CTI von zumindest 500 und vorzugsweise von zumindest 600 bewirkt eine ausreichende Isolierung bei den vorliegenden Abständen, um Ströme bis zu 40 A durch die Steckkontaktelemente zu leiten.

Am Isolierkörper 40 ist ein um das Steckgesicht 49 umlaufender Vorsprung 50 ausgebildet.

Der das Steckgesicht umgebende ringförmige Vorsprung 50 liegt mit seiner Stirnkante bündig am Rand der Blende 12 (Fig. 7) an. Die Oberfläche des Isolierkörpers 40 ist somit etwas gegenüber den Umfangskanten des Gehäuserings 8 nach innen zurückversetzt. Die am Isolierkörper 40 vorstehenden Buchsen 42 sind somit in einer Mulde geschützt angeordnet.

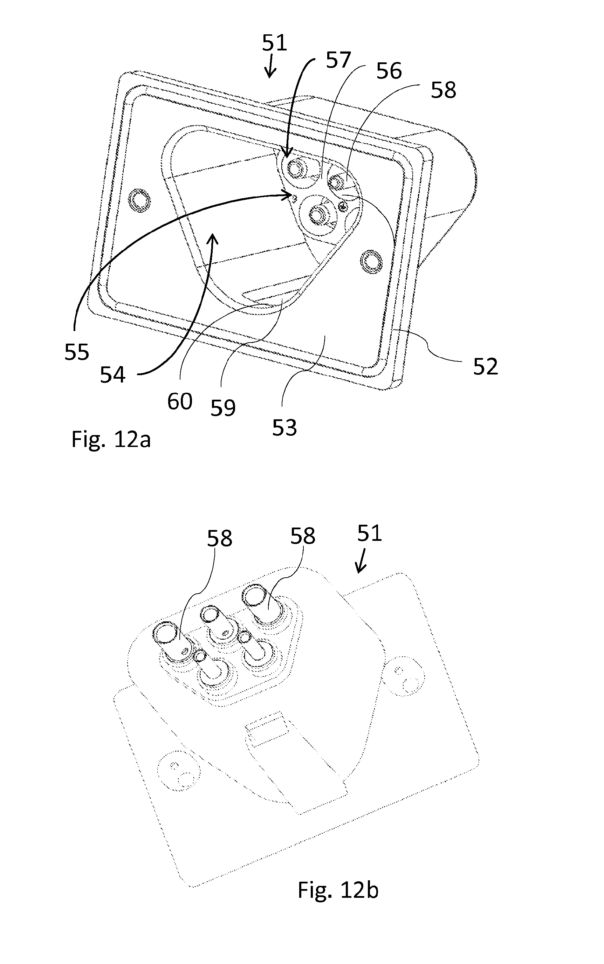

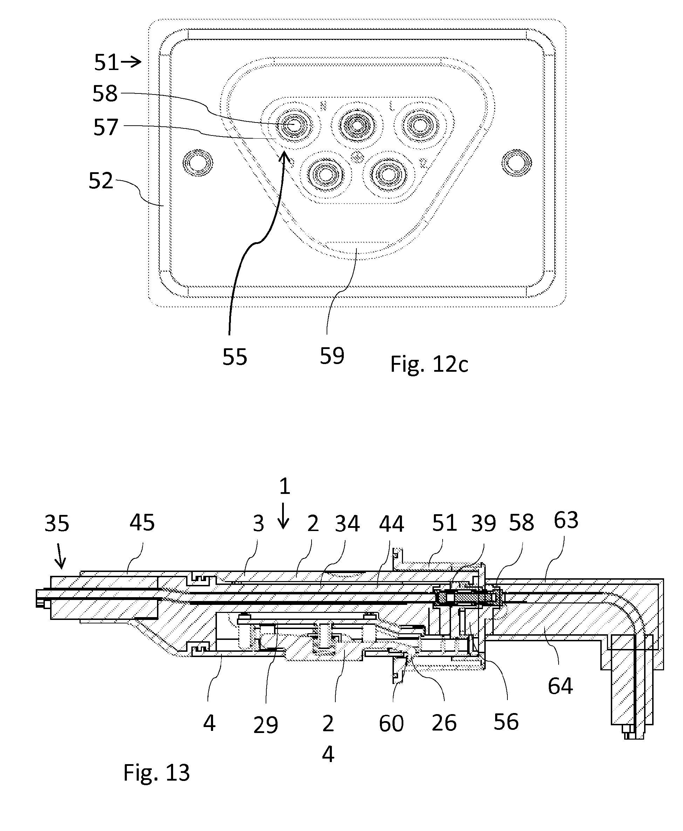

In den Figuren 12a-12c ist eine Gegensteckerbuchse 51 dargestellt, die fünf korrespondierende Steckkontaktelemente in Form von Stiften aufweist. Diese Gegenstecker weist einen Rahmen 52 auf, der eine Frontfläche 53 begrenzt. In der Frontfläche 53 ist eine Vertiefung 54 ausgebildet, deren Querschnittsform dem Querschnitt des Hochstromsteckers 1 entspricht und zur Aufnahme des vorderen Endes des Hochstromsteckers 1 ausgebildet ist. Am Boden dieser Vertiefung 54 ist ein Steckgesicht 55 ausgebildet, das korrespondierend zum Steckgesicht 49 des Hochstromsteckers 1 ist. Dieses Steckgesicht 55 umfasst einen vorstehenden Steckkörper 56, dessen Umfangsbegrenzung etwa dem Innenrand des umlaufenden Vorsprungs 50 des Steckgesichts 49 des Hochstromsteckers 1 entspricht. In dem Steckkörper 56 sind fünf Durchgangsöffnungen 57 ausgebildet, die jeweils eine Kontaktkammer darstellen, in welcher eines der Steckkontaktelemente 58 lagert. Die Durchgangsöffnungen 57 weisen jeweils eine derart große lichte Weite auf, dass die Buchsen 42a des Isolierkörpers 40 des Hochstromsteckers 1 eingeführt werden können, so dass die darin angeordneten buchsenartigen Steckkontaktelemente 39 die Steckkontaktstifte der stiftartigen Steckkontaktelemente 58 umgreifen können.

Die Stifte der Steckkontaktelemente 58 befinden sich alle innerhalb der Kontaktkammern, wobei der Steckkontaktstift für die Masse am weitesten vorsteht und die beiden Steckkontaktstifte für die Pilotsignale am stärksten zurückgesetzt sind. Hierdurch wird beim Verbinden des Hochstromsteckers 1 mit der Gegensteckerbuchse 51 zuerst die Masseleitung, dann die beiden Hochstromleitungen und erst dann die Leitungen für die Pilotsignale verbunden.

Erst wenn die Leitungen für die Pilotsignale verbunden sind, werden die Hochstromleitungen durchgeschaltet. Beim Trennen des Hochstromsteckers 1 von der Gegensteckerbuchse 51 werden zuerst die Pilotleitungen unterbrochen, wodurch automatisch die Hochstromleitungen abgeschaltet werden. Hierdurch wird sichergestellt, dass an keinem nicht gesteckten Hochstromstecker ein Hochstrompegel anliegt.

Im zusammengesteckten Zustand greift der Steckkörper 56 der Gegensteckerbuchse in die Mulde des Hochstromsteckers 1 ein und füllt den zwischen den Buchsen 42 bestehenden Zwischenraum aus. Dieser Stecker 56 ist vorzugsweise aus dem gleichen Material wie der Isolierkörper 40 ausgebildet und besitzt somit die gleichen Isolationseigenschaften.

Die Gegensteckerbuchse 51 weist im Bereich ihrer Vertiefung 54 im unteren Wandungsbereich eine Rastausnehmung 59 auf, die von einer quer zur Steckrichtung verlaufenden Rastkante 60 begrenzt wird. Beim Einführen des Hochstromsteckers 1 wird dessen Rastnase 26 mittels der an der Rastnase 26 vorgesehenen Einführschräge in den Hochstromstecker 1 hineingedrückt, bis die Rastnase die Rastkante 60 der Gegensteckerbuchse 51 überfahren hat. Aufgrund der Federbeaufschlagung des Rasthebels 24 wird die Rastnase 26 in die Rastausnehmung 59 gedrückt und hintergreift die Rastkante 60. Hierdurch ist der Hochstromstecker 1 in der Gegensteckerbuchse 51 fixiert. Erst durch Betätigen der Betätigungstaste 27 am Hochstromstecker 1 wird die Fixierung des Hochstromsteckers 1 in der Gegensteckerbuchse 51 wieder gelöst. Dieser kann von der Gegensteckerbuchs 51 entfernt werden.

Es hat sich gezeigt, dass der erfindungsgemäße Hochstromstecker 1 mit geringen Kräften in die Gegensteckerbuchse 51 eingesteckt und von dieser wieder gelöst werden kann. Die hierbei aufzubringenden Steckkräfte betragen etwa 15 N.

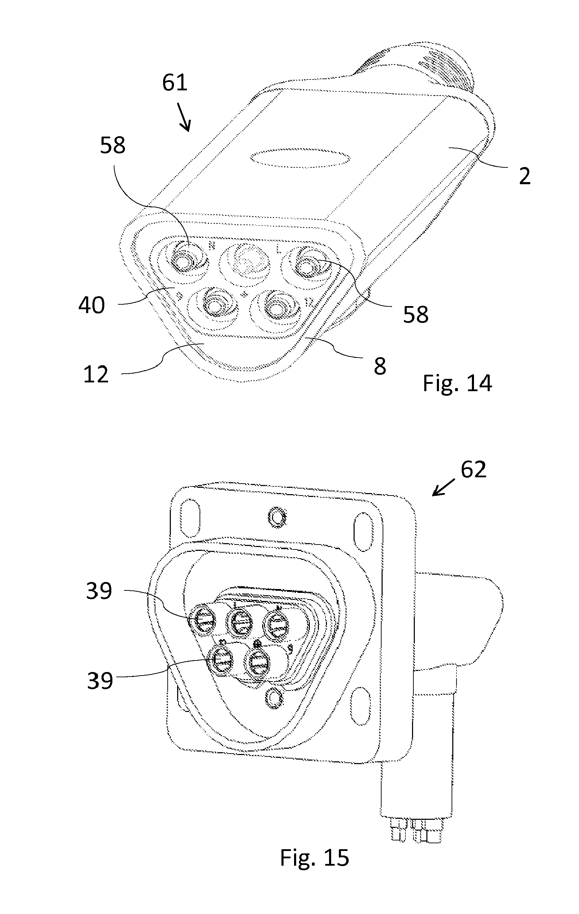

Die in den Figuren 12a-12c gezeigten Gegensteckerbuchse 51 ist zur Anordnung an einem Elektrofahrzeug vorgesehen. Der in Figur 1 gezeigte Hochstromstecker ist an dem Ende eines Kabels angeordnet, das an das Elektrofahrzeug angesteckt werden soll. Die Figuren 14 und 15 zeigen einen weiteren Hochstromstecker 61 mit stiftartigen Steckkontaktelementen 58 und eine Gegensteckerbuchse 62 mit buchsenartigen Steckkontaktelementen 39. Diese Gegensteckerbuchse 61 ist zur Anordnung an einer Ladestation vorgesehen. Der Hochstromstecker 61 ist zum Einstecken des Kabels an der Ladestation ausgebildet. Die buchsenartigen Steckverbinder 1 und 61 sind am stromführenden Ende der Leitungen angeordnet. Dies ist vorteilhaft, falls fehlerhafter Weise ein Hochstromsignal anliegen sollte, ist die Gefahr einer Kontaktierung bei einer buchsenartigen Steckkontaktelement wesentlich geringer als es bei einem stiftartigen Steckkontaktelement.

Figur 13 zeigt einen Schnitt durch den in die Gegensteckerbuchse 51 eingesteckten Hochstromsteckers 1. Hierin ist die Gegensteckerbuchse 51 zusammen mit einem Gegensteckergehäuse 63 und einen darin angeordneten Vergussteil 64 dargestellt. Der Aufbau dieser Gegensteckerbuchse 51 entspricht im wesentlich dem Aufbau des Hochstromsteckers 1, wobei hier kein Rasthebel vorgesehen ist und die Form aufgrund der stationären Anordnung, der Gegensteckerbuchse 51 beliebig ausgebildet sein kann. Gleiches gilt für die Gegensteckerbuchse 62.

Der Hochstromstecker 61 ist im wesentlichen genauso ausgebildet wie der Hochstromstecker 1, wobei lediglich anstelle von buchsenartigen Steckkontaktelementen stiftartige Steckkontaktelemente vorgesehen sind und der Isolierkörper einteilig ausgebildet ist.

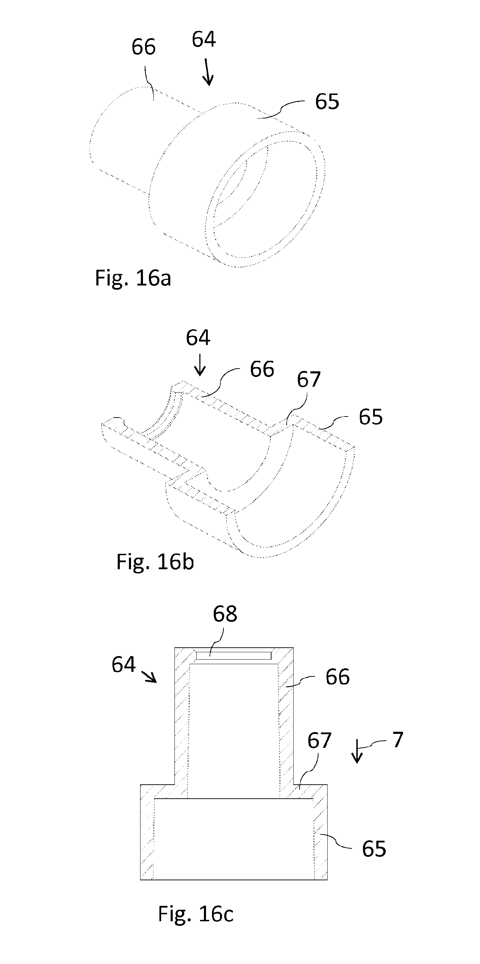

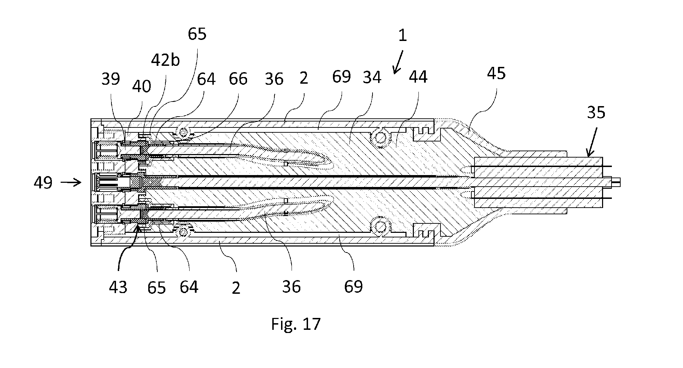

Figur 17 zeigt einen Bereich eines weiteren Ausführungsbeispiels eines Hochstromsteckers 63, der im wesentlichen genauso ausgebildet ist, wie der Hochstromstecker 1 und sich von diesem lediglich durch die Anordnung von Hülsen 64 (Figur 16a bis 16c) im Vergussteil 34 unterscheidet.

Die Hülsen 64 weisen einen in Steckrichtung vorderen Hülsenabschnitt 65 und einen hinteren Hülsenabschnitt 66 auf. Beide Hülsenabschnitte sind zylinderförmig, wobei der vordere Hülsenabschnitt 65 einen größeren Durchmesser als der hintere Hülsenabschnitt 66 besitzt. Der vordere Hülsenabschnitt 65 ist mit einem Übergangsabschnitt 67 mit dem hinteren Hülsenabschnitt 66 verbunden. Am rückseitigen Ende des hinteren Hülsenabschnitts 66 ist ein nach innen vorstehender Ringvorsprung 68 ausgebildet. Der Innendurchmesser dieses Ringvorsprungs 68 ist etwas kleiner als der Durchmesser der Adern 36 des Kabels, so dass dieser mit Presspassung auf den Adern sitzen kann. Der Durchmesser des vorderen Hülsenabschnitt 65 entspricht dem Durchmesser der rückseitigen Buchsen 42b des Isolierkörpers 40, so dass der vordere Hülsenabschnitte 65 formschlüssig auf eine der Buchsen 42b passt.

Vor dem Gießen des Gussteils 34 wird jeweils eine Hülse 64 über dem Verbindungsbereich zwischen einer Ader 36 und einem Steckkontaktelement 39 angeordnet, wobei der Ringvorsprung 68 die Ader 36 umschließt und der vordere Hülsenabschnitt auf jeweils einer der Buchsen 42b sitzt. Lediglich am Verbindungsbereich der die Masse führenden Ader und des entsprechenden Steckkontaktelementes wird keine Hülse vorgesehen.

Diese Anordnung umfassend den Isolierkörper 40, die Steckkontaktelemente 39, das in die Adern 36 aufgespleißte Kabel 35 und die Hülsen 64 wird dann vergossen. Die Hülsen 64 dichten den darin liegenden Verbindungsbereich gegenüber der Vergussmasse ab, so dass sich in jeder Hülse ein Hohlraum ausbildet. Diese Hohlräume bewirken ein gewisses Spiel der Steckkontaktelemente 39 im Hochstromstecker 63.

Beim Zusammenstecken des Hochstromsteckers 63 mit der Gegensteckerbuchse 51 wird zuerst das stiftartige Steckkontaktelement 58 der Masse in das ohne Spiel im Hochstromstecker 1 angeordneten buchsenartigen Steckkontaktelement 39 eingeführt und bewirkt eine Positionierung des Hochstromsteckers 63 bzgl. der Gegensteckerbuchse 51. Da die weiteren Steckkontaktelement 39 im Hochstromstecker 63 mit etwas Spiel angeordnet sind, können sie mit den weiteren stiftartigen Steckkontaktelementen verbunden werden, wobei Toleranzen in der Anordnung der Steckkontaktelemente 39, 58 sicher ausgeglichen werden.

In Figur 17 ist die Dämpfungsschicht 69 zwischen dem Vergussteil 34 und dem Gehäuse 2 dargestellt. Weiterhin kann man erkennen, dass das mittig angeordnete buchsenartige Steckkontaktelement 38 zum Stecken eines dünneren Stiftes als die übrigen buchsenartigen Steckkontaktelemente gemäß Figur 9a, 9b ausgebildet ist.

Die Erfindung ist oben anhand von Ausführungsbeispielen eines Hochstromsteckers erläutert, bei welchen die Steckkontaktelement an die Adern des Kabels gecrimpt sind. Im Rahmen der Erfindung ist es selbstverständlich auch möglich, die Verbindung zwischen den Adern und den Steckkontaktelementen als Lötverbindung oder Klebeverbindung oder als sonstige Verbindung, die sowohl eine mechanische als auch elektrische Verbindung gewährleistet, auszubilden.

Die oben erläuterten Ausführungsbeispiele sind Hochstromstecker, die mit einem Rasthebel versehen sind, der mittels einer Rastnase an einer Gegensteckerbuchse eingreifen kann. Im Rahmen der Erfindung ist es selbstverständlich auch möglich, den Rasthebel an der Gegensteckerbuchse vorzusehen, der dann mittels einer Rastnase in eine entsprechende Rastausnehmung im Hochstromstecker eingereift.

### Bezugszeichenliste

- 1: Hochstromstecker
- 2: Gehäuse
- 3: Oberteil
- 4: Unterteil
- 5: Deckenwandung
- 6: Längskante
- 7: Steckrichtung
- 8: Gehäusering
- 9: Abstufung
- 10: Steckstift
- 11: Dichtnut
- 12: Blende
- 13: Öffnung für Steckgesicht
- 14: Seitenwandung
- 15: Längskante
- 16: vordere Kante
- 17: Stecklippe
- 18: Dichtnut
- 19: Buchse
- 20: Öffnung
- 21: Lagerschale
- 22: Rastnasenöffnung
- 23: Innengehäuseabschnitt
- 24: Rasthebel
- 25: Lagerschale
- 26: Rastnase
- 27: Betätigungstaste
- 28: Sackloch
- 29: Innendeckel
- 30: Buchse
- 31: Steg
- 32: Hohlstift
- 33: Schraubenfeder
- 34: Vergussteil
- 35: Kabel

- 36: Ader
- 37: Kabelisolationsmantel
- 38: Aderisolationsschutz
- 39: Steckkontaktelement
- 40: Isolierkörper
- 41: Grundkörper
- 42: Buchse
- 43: Stufe
- 44: Kern
- 45: Tülle
- 46: Steckabschnitt
- 47: Endabschnitt
- 48: Lasche
- 49: Steckgesicht
- 50: Vorsprung
- 51: Gegensteckerbuchse
- 52: Rahmen
- 53: Frontfläche
- 54: Vertiefung
- 55: Steckgesicht
- 56: Steckkörper
- 57: Durchgangsöffnung (Kontakt- kammer)
- 58: Steckkontaktelement
- 59: Rastausnehmung
- 60: Rastkante
- 61: Hochstromstecker
- 62: Gegensteckerbuchse
- 63: Hochstromstecker
- 64: Hülse
- 65: vorderer Hülsenabschnitt
- 66: hinterer Hülsenabschnitt
- 67: Übergangsabschnitt
- 68: Ringvorsprung

## Patentansprüche

1. Miniaturisierter Hochstromstecker (1, 61, 63) zum elektrischen Verbinden eines Kabels (35) mit einem Elektrofahrzeug oder einer entsprechenden Ladestation umfassend
- ein langgestrecktes, rohrförmiges Gehäuse (2) mit einem im wesentlichen dreieckförmigen Querschnitt, in dem an einem Ende ein Isolierkörper (40) angeordnet ist, und
- zumindest vier Steckkontaktelemente (39, 58), die in Durchgangsöffnungen des Isolierkörpers (40) lagern und die in einem Dreieck-Raster angeordnet sind.

2. Miniaturisierter Hochstromstecker nach Anspruch 1,
**dadurch gekennzeichnet,**
**dass** benachbarte Steckkontaktelemente (39, 58) jeweils paarweise den gleichen Abstand aufweisen.

3. Miniaturisierter Hochstromstecker nach Anspruch 1 oder 2,
**dadurch gekennzeichnet,**
**dass** der Mittenabstand zweier benachbarter Steckkontaktelemente (39, 58) etwa 8 mm bis 10 mm und vorzugsweise 8,5 mm bis 9,5 mm beträgt.

4. Miniaturisierter Hochstromstecker nach einem der Ansprüche 1 bis 3,
**dadurch gekennzeichnet,**
**dass** das Gehäuse (2) drei langgestreckte Seitenflächen mit einer maximalen Breite von 50 mm und vorzugsweise mit einer maximalen Breite von 40 mm aufweist.

5. Miniaturisierter Hochstromstecker (1, 61, 63) zum elektrischen Verbinden eines Kabels (35) mit einem Elektrofahrzeug oder mit einer entsprechenden Ladestation, insbesondere nach einem der Ansprüche 1 bis 4, mit
einem rohrförmigen Gehäuse (2), in dem ein Vergussteil (34) lagert, wobei das Vergussteil (34) aus einer ausgehärteten Vergussmasse besteht, in die ein Endabschnitt des mehrere Adern (36) umfassenden Kabels (35) eingegossen ist, wobei innerhalb des Vergussteils (34) das Kabel (35) in seine einzelnen Adern (36) aufgespleißt ist, und die Adern (36) jeweils mit einem Steckkontaktelement (39, 58) verbunden sind, die in einem endseitig an das Vergussteil (34) angeformten Isolierkörper (40) lagern,
**dadurch gekennzeichnet,**
**dass** der Vergussteil (34) mit etwas Spiel zum Gehäuse (2) ausgebildet ist, wobei zwischen dem Vergussteil (34) und dem Gehäuse (2) eine Dämpfungsschicht vorgesehen ist.

6. Miniaturisierter Hochstromstecker nach Anspruch 5,
**dadurch gekennzeichnet,**
**dass** die Dämpfungsschicht aus Silikon ausgebildet ist.

7. Miniaturisierter Hochstromstecker nach Anspruch 5 oder 6,
**dadurch gekennzeichnet,**
**dass** der Vergussteil (34) aus einem harten Kern (44) und einer an dem Isolierkörper (40) gegenüber liegenden Bereich des Kerns (44) angeformten elastischen Tülle (45) ausgebildet ist.

8. Miniaturisierter Hochstromstecker nach einem der Ansprüche 5 bis 7,
**dadurch gekennzeichnet,**
**dass** zumindest einige der Steckkontaktelemente (39, 58) mit Spiel im Vergussteil (34) angeordnet sind, wobei das Spiel vorzugsweise durch einen Hohlraum innerhalb einer den Verbindungsbereich zwischen einer der Adern (36) und jeweils einem der Steckkontaktelemente (39, 58) abdeckenden Hülse (64) ausgebildet ist.

9. Miniaturisierter Hochstromstecker nach einem der Ansprüche 1 bis 8,
**dadurch gekennzeichnet,**
**dass** der Isolierkörper (40) aus einem Material mit einer Kriechstromfestigkeit (CTI, Comparative Tracking Index) von zumindest 400 und insbesondere von zumindest 600, wie z.B. Polyethylen (PE-LD, PE-HD), Polyesterharz, Polytetrafluorethylen (PTFE), Ethylen Vinylacetat (E/VA), Polyphthalamid mit 33% Glasfaseranteil (PPA GF33), Polypropylen (PP) oder Polyamid (PA 6, PA66, PA6 V0 - brandgeschützt, PA6 E - extrudiert), ausgebildet ist.

10. Miniaturisierter Hochstromstecker nach einem der Ansprüche 1 bis 9,
**dadurch gekennzeichnet,**
**dass** das Gehäuse (2) aus zwei Teilen (3, 4) ausgebildet ist, wobei ein Teil eine langgestreckte Wandung (5) und an dem in Steckrichtung (7) vorderen Ende einen Gehäusering (8) aufweist, der einstückig mit der Wandung (5) ausgebildet ist, wobei der Gehäusering (8) ein Steckgesicht (49) des Hochstromsteckers (1, 61, 63) umschließt.

11. Miniaturisierter Hochstromstecker nach einem der Ansprüche 1 bis 10,
**dadurch gekennzeichnet,**
**dass** der Hochstromstecker (1, 61, 63) ein Rastelement (24; 59, 60) aufweist, das zum lösbaren Einrasten des Hochstromsteckers (1, 61, 63) an einer entsprechenden Gegensteckerbuchse (51) ausgebildet ist.

12. Miniaturisierter Hochstromstecker nach Anspruch 11,
**dadurch gekennzeichnet,**
**dass** das Rastelement (24) entweder ein federbeaufschlagter Rasthebel (24) mit einer Rastnase (26) ist, der in einer Hohlkammer des Gehäuses (2) schwenkbar gelagert ist, oder eine Rastausnehmung (59) mit einer Rastkante (60) ist.

13. Miniaturisierter Hochstromstecker nach einem der Ansprüche 1 bis 12,
**dadurch gekennzeichnet,**
**dass** der Hochstromstecker (1, 61, 63) am Isolierkörper (40) in Steckrichtung (7) vorstehende Buchsen (42a) angeformt sind, die die Steckkontaktelemente (39) umschließen und ein Stück in Steckrichtung (7) an den Steckkontaktelementen vorstehen.

14. Miniaturisierter Hochstromstecker nach Anspruch 13,
**dadurch gekennzeichnet,**
**dass** die Buchsen (42a) in einer Mulde geschützt angeordnet sind.

15. Miniaturisierte Gegensteckerbuchse (51) zum steckbaren Verbinden mit einem Hochstromstecker (1, 61, 63) nach einem der Ansprüche 1 bis 14,
**dadurch gekennzeichnet,**
**dass** die Gegensteckerbuchse einen Steckkörper (56) aufweist, der derart ausgebildet ist, dass im zusammengesteckten Zustand der Steckkörper (56) der Gegensteckerbuchse in eine entsprechende Mulde des Hochstromsteckers eingreift und diese im wesentlichen ausfüllt.
